# FASCICULE DE BREVET EUROPEEN

(11) **EP 2 231 512 B1**
(45) Date de publication et mention de la délivrance du brevet: **27.06.2012**
(21) Numéro de dépôt: 08857663.2
(22) Date de dépôt: 24.11.2008
(51) Int. Cl.: C01B 3/34, C01B 3/48, C01B 3/56, F04F 5/46, F04F 5/54

(54) **PROCEDE ET INSTALLATION DE PRODUCTION D'UN GAZ DE SYNTHESE REFROIDI ET COMPRIME**
Verfahren und Anlage zur Herstellung eines gekühlten komprimierten Synthesegases
METHOD AND PLANT FOR PRODUCING A CHILLED COMPRESSED SYNTHESIS GAS

(30) Priorité: 26.11.2007 FR 0759299
(43) Date de publication de la demande: 29.09.2010
(73) Titulaire: L'Air Liquide Société Anonyme pour l'Etude et l'Exploitation des Procédés Georges Claude, 75007 Paris (FR)
(72) Inventeur: DAVIDIAN, Benoît, F-94100 Saint Maur Des Fosses (FR)
(74) Mandataire: Conan, Philippe Claude
(86) Numéro de dépôt international: PCT/FR2008/052114
(87) Numéro de publication internationale: WO 2009/071826

(56) Documents cités:
- EP-A- 1 400 489
- WO-A-2005/000736
- FR-A- 2 805 008
- CHABBERT, FRÉDÉRIQUE: "A thermokinetic compressor able to compress any gas without mechanical energy" CORDIS FOCUS "TECHNOLOGY OPPORTUNITIES TODAY" ISSN 1025-4013, no. 45, octobre 2003 (2003-10), page 17, XP002487592 France

## Description

La présente invention concerne un procédé et une installation pour la production d'un gaz de synthèse refroidi et comprimé.

La génération d'un gaz de synthèse H₂/CO se fait par reformage de méthane (ou autres charges d'hydrocarbures de type Naphta, fioul, méthanol...) à la vapeur (SMR) ou par oxydation partielle (POX, ATR). Ceci se fait à très haute température (800-1300°C).

Afin de prévenir l'endommagement des équipements métalliques, il est nécessaire en sortie de réacteur, et avant son traitement ultérieur (Shift, Epuration PSA, ...), de refroidir le gaz de synthèse de façon brutale pour éviter un passage prolongé du gaz dans la zone de température où a lieu le « carbon dusting », soit une zone comprise entre 400 et 800°C. A ces températures en effet, le gaz corrode les équipements métalliques.

Une solution connue mise en oeuvre consiste à refroidir le gaz par passage du gaz de synthèse très chaud dans une chaudière permettant ainsi de récupérer sa chaleur pour produire de la vapeur ; cette chaudière assure la trempe du gaz de synthèse (aussi appelé syngas), c'est-à-dire son refroidissement rapide.

Cependant, la production globale de vapeur de l'ensemble du procédé syngas est en général excédentaire par rapport à sa consommation, on doit donc, pour valoriser la chaleur du syngas, trouver un client intéressé par l'utilisation de cette vapeur.

Il existe donc un besoin pour une valorisation de la chaleur du syngas récupérée lors de la trempe de celui-ci différente d'une production de vapeur.

Le but de la présente invention est donc de proposer un procédé de refroidissement du syngas avec une récupération de la chaleur non dédiée à la production de vapeur, ou plus généralement à la production d'un ou plusieurs fluides chauds.

Un autre but de la présente invention est d'augmenter la pression du syngas par rapport à la pression de sortie du reformage.

L'invention propose pour cela de réaliser la trempe du gaz de synthèse très chaud en sortie du réacteur de reformage par injection directe d'eau liquide à l'aide d'un compresseur thermocinétique qui va permettre, lors d'une étape unique, de comprimer le syngas tout en le refroidissant de façon brutale, permettant d'éviter le « metal dusting ».

L'augmentation de la pression du syngas ainsi réalisée peut être mise à profit de différentes manières :
- pour une pression de syngas en sortie de réacteur donnée, on bénéficie d'une pression supérieure en aval, ce qui peut être intéressant dans le traitement PSA (meilleur efficacité à plus haute pression) et dans les éventuelles compressions de l'H₂ notamment jusqu'à la pression du réseau (réduction de l'énergie de compression) ;
- à pression avale donnée, on va pouvoir se contenter d'une pression dans le réacteur de génération de syngas plus faible, ce qui permet de réduire par exemple la quantité de CH₄ contenue dans le syngas (augmentation du rendement de conversion) ou encore de réduire l'énergie de compression de la charge d'hydrocarbures et éventuellement de l'O₂ dans le cas POX et ATR. Dans le cas où on décide de baisser la pression dans le réformer (par rapport à un niveau de pression classique), on a un bénéficie supplémentaire très important : cela permet de réduire les contraintes mécaniques sur les tubes de reformage dans le four, ce qui permet d'allonger de façon très significative la durée de vie des tubes.

On combine ainsi deux effets simultanés particulièrement avantageux :
- Une trempe du syngas
- Une augmentation de la pression du syngas

Le compresseur thermocinétique permet cette valorisation de l'énergie thermique contenue dans le syngas issu de l'étape de génération. Cette énergie est en effet consommée par le syngas lui-même.

Un compresseur thermocinétique comprime un gaz en l'accélérant jusqu'à une vitesse élevée, de préférence supérieure à la vitesse du son (typiquement de l'ordre de 330 m/s), en le refroidissant, par exemple par contact direct avec des gouttelettes d'eau, et en le ralentissant.

Le refroidissement peut avoir lieu avant, pendant ou après l'accélération.

L'accélération peut être produite en forçant le gaz à passer dans un col, par exemple un col de Laval. De même pour décélérer le gaz, il est passé dans un deuxième col, par exemple un col de Laval.

L'énergie requise par le compresseur thermocinétique est fournie par le syngas ; le liquide de refroidissement préférentiel est de l'eau, laquelle est éliminée et/ou utilisée ultérieurement en même temps que l'eau déjà présente (sous forme de vapeur) dans le gaz de synthèse en sortie de reformage.

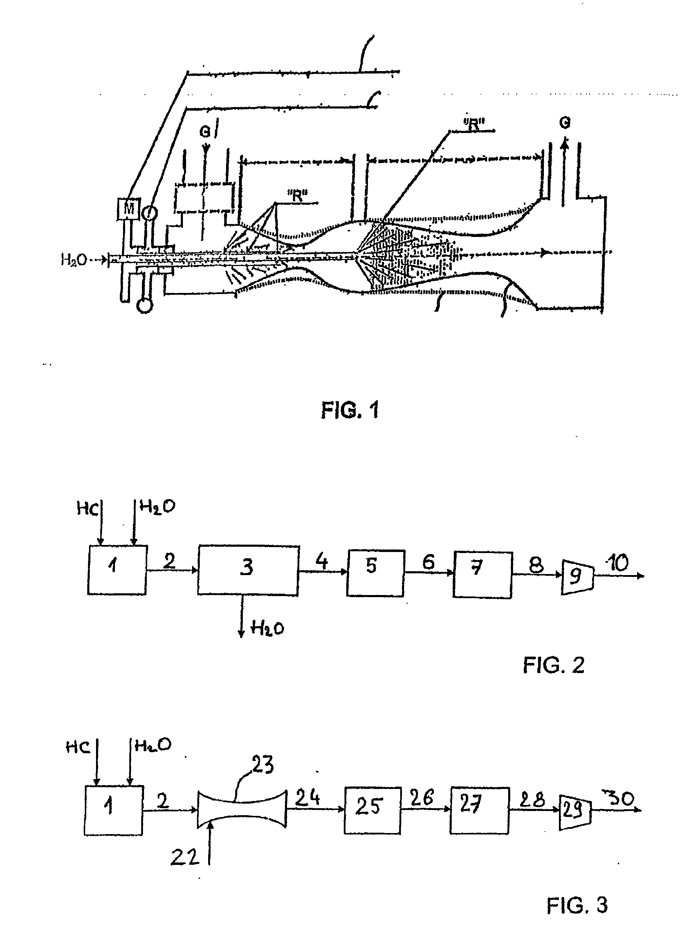

Un exemple d'un compresseur thermocinétique est décrit dans la demande de brevet FR-A-2805008. Le principe repose sur le refroidissement d'un gaz par vaporisation d'eau en fines gouttelettes, suivi de sa compression, le tout en utilisant un arrangement de tuyères convergentes et divergentes. La Figure 1 présente un modèle de compresseur thermocinétique selon ce concept.

Selon son premier objet, l'invention propose un procédé de production d'un gaz de synthèse à partir d'une charge hydrocarbonée comprenant au moins les étapes de génération d'un gaz de synthèse brut chaud à une température T2 et une pression P2, refroidissement rapide du gaz brut pour produire un gaz de synthèse refroidi à une température T24, dans lequel l'étape de refroidissement du gaz de synthèse brut chaud est réalisée dans au moins un compresseur thermocinétique qui refroidit et comprime simultanément le gaz brut chaud pour produire le gaz de synthèse refroidi à la température T24et comprimé à une pression P24, ceci à l'aide d'eau liquide de refroidissement.

Avantageusement, le gaz de synthèse brut chaud est généré à une température T2 supérieure à 800°C.

Avantageusement encore, le gaz de synthèse refroidi a une température maximale de 400°C.

Selon un autre objet de l'invention, celle-ci concerne une installation de production de gaz de synthèse comprenant au moins un réacteur pour générer un gaz de synthèse brut chaud, un compresseur thermocinétique, des moyens pour alimenter le réacteur, des moyens pour envoyer le gaz de synthèse chaud brut du réacteur au compresseur thermocinétique, des moyens pour alimenter le compresseur thermocinétique 23 en liquide de refroidissement 22 ainsi que des moyens de sortie du gaz de synthèse refroidi et comprimé 24.

L'invention va être décrite plus en détail en lien avec les figures 2 et 3, la Figure 2 représentant un schéma de base d'un procédé de production de gaz de synthèse en vue d'une production finale d'hydrogène, la Figure 3 représentant un procédé de production de gaz de synthèse en vue d'une production finale d'hydrogène selon l'invention.

Selon la Figure 2, conforme à l'art antérieur, un reformeur de méthane à la vapeur 1 est alimenté en hydrocarbures légers HC et en vapeur pour produire un gaz de synthèse 2 contenant essentiellement H₂, CO, CO₂ à une pression P2 et une température T2. Le syngas 2 produit est alors trempé par passage dans une chaudière 3 où il transfère brutalement sa chaleur à de l'eau de chaudière pour produire de la vapeur surchauffée et un syngas 4 refroidi à une pression P4 et une température T4. Le syngas 4 est introduit dans un réacteur de shift 5 en présence d'eau (non représentée) pour produire un courant 6 d'hydrogène impur à une pression P6. L'hydrogène impur 6 est ensuite introduit dans une unité PSA 7 où il est purifié pour fournir de l'hydrogène purifié 8 à une pression P8. L'hydrogène 8 est enfin comprimé dans un compresseur 9 afin de fournir de l'hydrogène comprimé 10 à une pression P10 supérieure à la pression du réseau 11 auquel il est destiné.

Selon la Figure 3, conforme à l'invention, un reformeur de méthane à la vapeur 1 est alimenté en hydrocarbures légers HC et en vapeur pour produire un gaz de synthèse 2 contenant essentiellement H₂, CO, CO₂ à une pression P2 et une température T2. Le syngas produit 2 passe alors dans le compresseur thermocinétique 23 où il est comprimé et brutalement refroidi (trempé) par injection directe d'eau liquide 22, on obtient alors un syngas 24 refroidi à une température T24, comprimé à une pression P24 et présentant une teneur en eau augmentée de la quantité d'eau de refroidissement injectée. Le syngas 24 est introduit dans un réacteur de shift 25 en présence d'eau (non représentée) pour produire un courant 26 d'hydrogène impur à une pression P26. L'hydrogène impur 26 est ensuite introduit dans une unité PSA 27 où il est purifié pour fournir de l'hydrogène purifié 28 à une pression P28. L'hydrogène 28 est enfin comprimé, si nécessaire dans un compresseur 29 afin de fournir de l'hydrogène comprimé 30 à une pression P30 supérieure à la pression du réseau 31 auquel il est destiné.

Le passage du gaz de synthèse 22 dans le compresseur thermocinétique 23 permettant d'augmenter la pression des gaz de procédé en aval, offre entre autres avantages :
- une meilleure efficacité du traitement PSA,
- une réduction de l'énergie de compression nécessaire pour amener l'hydrogène jusqu'à la pression du réseau,
- une possibilité d'abaissement de la pression du reformage (par rapport à un niveau de pression de reformage classique), permettant d'obtenir grâce à la compression atteinte dans le compresseur thermocinétique une pression de gaz de synthèse en aval classique ; cela permet d'améliorer le taux de conversion de CH4 , et de réduire les contraintes mécaniques sur les tubes de reformage ce qui augmente la durée de vie des tubes.

Les schémas de base ci-dessus, tant de la Figure 2 que de la Figure 3 sont donnés pour des reformeurs de méthane à la vapeur (SMR), ils peuvent être étendus à des réacteurs d'oxydation partielle (POX), à des réacteurs de reformage auto thermique (ATR), à des reformeurs de méthanol...

## Revendications

1. Procédé de production d'un gaz de synthèse à partir d'une charge hydrocarbonée comprenant au moins les étapes de :
- génération d'un gaz de synthèse (2) brut chaud à une température T2 et une pression P2,
- refroidissement rapide du gaz (2) pour produire un gaz de synthèse refroidi (24) à une température T24
**caractérisé en ce que** l'étape de refroidissement du gaz de synthèse (2) est réalisée dans au moins un compresseur thermocinétique(23) qui refroidit et comprime simultanément le gaz (2) pour produire le gaz de synthèse (24) refroidi à la température T24 et comprimé à une pression P24, ceci à l'aide d'eau liquide de refroidissement (22).

2. Procédé selon la revendication 1 dans lequel le gaz de synthèse brut (2) est généré à une température T2 supérieure à 800°C.

3. Procédé selon la revendication 1 ou 2 dans lequel le gaz de synthèse refroidi et comprimé (24) a une température maximale de 400°C.

4. Installation de production de gaz de synthèse comprenant au moins un réacteur (1) pour générer un gaz de synthèse brut, un compresseur thermocinétique (23), des moyens pour alimenter le réacteur (1), des moyens pour envoyer le gaz (2) du réacteur (1) au compresseur thermocinétique (23), des moyens pour alimenter le compresseur thermocinétique (23) en liquide de refroidissement (22) ainsi que des moyens de sortie du gaz de synthèse refroidi et comprimé (24).

## Claims

1. A method for producing a synthesis gas from a hydrocarbon feed, comprising at least the steps of:
- generating a hot crude synthesis gas (2) at a temperature T2 and pressure P2,
- rapidly cooling the gas (2) to produce a cooled synthesis gas (24) at a temperature T24
**characterised in that** the synthesis gas (2) cooling step takes place in at least one thermokinetic compressor (23) which simultaneously cools and compresses the gas (2) to produce the synthesis gas (24) cooled to the temperature T24 and compressed to a pressure P24 with the use of water coolant (22).

2. A method according to claim 1, wherein the crude synthesis gas (2) is generated at a temperature T2 of over 800°C.

3. A method according to claim 1 or 2, wherein the cooled, compressed synthesis gas (24) has a maximum temperature of 400°C.

4. A plant for producing synthesis gas comprising at least one reactor (1) for generating a crude synthesis gas, one thermokinetic compressor (23), means for feeding the reactor (1), means for transporting the gas (2) from the reactor (1) to the thermokinetic compressor (23), means for feeding the thermokinetic compressor (23) with coolant (22) and means for removing the cooled, compressed synthesis gas (24).

## Patentansprüche

1. Verfahren zur Herstellung eines Synthesegases aus einer kohlenwasserstoffhaltigen Beschickung, umfassend wenigstens folgende Schritte:
- Erzeugen eines heißen Roh-Synthesegases (2) bei einer Temperatur T2 und einem Druck P2,
- rasches Abkühlen des Gases (2), um ein auf eine Temperatur T24 abgekühltes Synthesegas (24) herzustellen,
**dadurch gekennzeichnet, dass** der Schritt des Abkühlens des Synthesegases (2) in wenigstens einem thermokinetischen Verdichter (23) ausgeführt wird, der das Gas (2) gleichzeitig abkühlt und verdichtet, um das auf die TemperaturT24 abgekühlte und einen Druck P24 verdichtete Synthesegas (24) herzustellen, und dies mit Hilfe eines flüssigen Kühlwassers (22).

2. Verfahren nach Anspruch 1, wobei das Roh-Synthesegas (2) bei einer Temperatur T2, die höher als 800°C ist, erzeugt wird.

3. Verfahren nach Anspruch 1 oder 2, wobei das abgekühlte und verdichtete Synthesegas (24) eine Höchsttemperatur von 400°C aufweist.

4. Anlage zur Herstellung eines Synthesegases, wenigstens umfassend einen Reaktor (1) zum Erzeugen eines Roh-Synthesegases, einen thermokinetischen Verdichter (23), Mittel für die Beschickung des Reaktors (1), Mittel zum Leiten des Gases (2) vom Reaktor (1) zum thermokinetischen Verdichter (23), Mittel zum Beschicken des thermokinetischen Verdichters (23) mit Kühlflüssigkeit (22) sowie Auslassmittel für das abgekühlte und verdichtete Synthesegas (24).
